# EUROPÄISCHE PATENTSCHRIFT

(11) **EP 1 669 659 B1**
(45) Veröffentlichungstag und Bekanntmachung des Hinweises auf die Patenterteilung: **01.10.2008**
(21) Anmeldenummer: 04029117.1
(22) Anmeldetag: 08.12.2004
(51) Int. Cl.: F16L 55/054

(54) **Pulsationsdämpfer und Verfahren zur Herstellung von Pulsationsdämpfern**
Pulsation damper, method of manufacturing and use thereof
Ammortisseur de pulsations, son procédé de fabrication et son utilisation

(43) Veröffentlichungstag der Anmeldung: 14.06.2006
(60) Teilanmeldung: 08004238.5
(73) Patentinhaber: Carl Freudenberg KG, 69469 Weinheim (DE)
(72) Erfinder: Luxem, Andreas, 56333 Winningen (DE); Stubenrauch, Frank, 65558 Burgschwalbach (DE); Käsler, Richard, 53424 Remagen (DE)

(56) Entgegenhaltungen:
- DE-A1- 3 333 597
- GB-A- 1 358 473
- US-A- 2 875 787
- US-A- 3 625 242
- US-A- 4 431 200
- US-A- 4 759 387
- US-A- 4 979 441
- US-A- 6 032 651

## Beschreibung

### Technisches Gebiet

Die Erfindung betrifft einen Pulsationsdämpfer, umfassend einen Grundkörper mit einem Einlass und einem Auslass, die durch einen Kanal miteinander strömungsverbunden sind, wobei der Kanal Durchgänge aufweist, welche den Kanal mit einer Überlaufkammer strömungsverbinden, und wobei die Überlaufkammer durch eine zumindest teilweise flexible Membran von einer Ausgleichkammer abgetrennt ist, die als abgeschlossener Raum ohne Zuleitung ausgebildet ist. Auch betrifft die Erfindung ein Verfahren zur Herstellung von Pulsationsdämpfern, wobei zumindest die Bauteile des Pulsationsdämpfers, welche zur Herstellung einer abgeschlossenen Ausgleichkammer ohne Zuleitung benötigt werden, in einem Arbeitsraum positioniert werden und wobei die Bauteile zur abschließenden Herstellung der Ausgleichkammer zusammengefügt werden. Schließlich betrifft die Erfindung eine Verwendung von Pulsationsdämpfem in hydraulischen Versorgungssystemen von Kraftfahrzeugen.

### Stand der Technik

Derartige Pulsationsdämpfer und Verfahren sind aus dem Stand der Technik bereits bekannt (US-A-4 979 441). Pulsationsdämpfer der eingangs genannten Art finden Verwendung in hydraulischen Leitungen. Sie dienen insbesondere der Glättung bzw. Reduzierung von Pulsationen in hydraulischen Leitungen.

Des Weiteren finden die genannten Pulsationsdämpfer Verwendung als Kolbenspeicher. Kolbenspeicher werden insbesondere in Fahrwerken von Kraftfahrzeugen eingesetzt.

Die gattungsbildenden Pulsationsdämpfer und Verfahren zur Herstellung solcher Pulsationsdämpfer weisen jedoch im Hinblick auf den praktischen Einsatz Nachteile auf. Bei den gattungsbildenden Pulsationsdämpfern ist insbesondere nachteilig, dass deren Ausgleichkammern häufig nur unter Vorkehrung komplexer Einrichtung mit Druck beaufschlagbar sind. Um einen einwandfreien Einsatz der Pulsationsdämpfer zu gewährleisten, müssen diese einer ständigen Wartung unterzogen werden. Bei der Wartung muss zunächst der Druck innerhalb der Ausgleichkammer überprüft werden und sodann dem Solldruck angepasst werden. Hierzu sind die Ausgleichkammern häufig mit Befüllstutzen versehen, die in nur aufwendiger Weise gegen die Atmosphäre zufriedenstellend abdichtbar sind.

Aufgrund nur wenig gebrauchstauglicher Abdichtungsmaßnahmen weisen die Ausgleichkammern nach einiger Zeit nicht mehr den Druck auf, der für eine einwandfreie Funktion der Pulsationsdämpfer notwendig ist.

Aus der US 4,759,387 A ist ein Pulsationsdämpfer bekannt, dessen Ausgleichkammer eine Zuleitung aufweist.

Aus der US 4,979,441 A ist ein Pulsationsdämpfer bekannt, der einen zylindrischen Außenkörper mit unterschiedlichen Außendurchmessern umfasst.

Aus der US 2,875,787 A ist ein Pulsationsdämpfer bekannt, dessen Ausgleichkammer Zuleitungen aufweist.

Aus der US 3,625,242 A ist ein Pulsationsdämpfer bekannt, dessen Kanal jeweils endseitig Gewindegänge aufweist.

Aus der GB 1 358 473 A ist ein Pulsationsdämpfer mit einem verfahrbaren Kolben bekannt, wobei am Kolben eine flexible Membran anliegt.

Ein solcher Pulsationsdämpfer ist auch aus der US 6,032,651 A bekannt.

Aus der DE 33 33 597 A1 ist ein Pulsationsdämpfer bekannt, in dessen Ausgleichkammer ein Schaumstoffkörper angeordnet ist.

Aus der US 4,431,200 A ist ein Sicherungsring bekannt, der eine zick-zack förmige Strukur aufweist.

### Darstellung der Erfindung

Der Erfindung liegt die Aufgabe zugrunde, Systeme mit Pulsationsdämpfem der eingangs genannten Art derart auszugestalten und weiterzubilden, dass ein möglichst leckagefreier Betrieb bei teilearmem, einfachem konstruktivem Aufbau gewährleistet ist.

Die vorliegende Erfindung löst die zuvor genannte Aufgabe durch die Merkmale des Patentanspruchs 1. Danach ist ein Pulsationsdämpfer der eingangs genannten Art **dadurch gekennzeichnet, dass** der Grundkörper aus drei Bauteilen gefertigt ist, von denen jeweils zwei durch eine Dichtung gegeneinander abgedichtet sind, wobei ein Bauteil als Kanal ausgestaltet ist.

Erfindungsgemäß ist zunächst erkannt worden, dass die gattungsbildenden Pulsationsdämpfer in konstruktiver Hinsicht wenig gebrauchstauglich ausgebildet sind. In einem nächsten Schritt ist erkannt worden, dass die bekannten Pulsationsdämpfer im Hinblick auf die Abdichtung der Ausgleichkammer erhebliche Nachteile aufweisen. Schließlich ist erkannt worden, dass eine integrale Ausbildung der Ausgleichkammer, welche als abgeschlossener Raum ausgebildet ist, nur in geringem Maße Dichtungsvorkehrungen erfordert.

Eine aufwendige Abdichtung einer Zuleitung ist insoweit nicht notwendig. Des Weiteren werden keine Einrichtungen zur nachträglichen Befüllung der Ausgleichkammer benötigt. Insoweit weist ein erfindungsgemäßer Pulsationsdämpfer einen konstruktiv einfachen Aufbau auf, der nach einmaliger Befüllung der Ausgleichkammer den in ihr vorherrschenden Druck bewahrt und einen optimalen Betrieb gewährleistet.

Der Grundkörper ist aus drei Bauteilen gefertigt, von denen jeweils zwei durch eine Dichtung gegeneinander abgedichtet sind. Dieser konstruktive Aufbau minimiert die Anzahl der verwendeten Dichtungen des Pulsationsdämpfers. Letztlich sind bei einem solchen konstruktiven Aufbau nur zwei Dichtungskörper notwendig. Insoweit ist eine problemlose Fertigung mit wenig Einzelteilen realisierbar. Folglich ist die eingangs genannte Aufgabe gelöst.

Im Hinblick auf eine problemlose Fertigung könnte die Summe der Volumina der Ausgleichkammer und der Überlaufkammer im Betrieb stets konstant sein. Durch diese konkrete Ausgestaltung ist es möglich, einen einzigen Hohlraum zu fertigen, welcher durch Einfügen einer einzigen Membran in zwei Räume aufteilbar ist.

Die Ausgleichkammer könnte mit Druck beaufschlagt sein. Dabei ist denkbar, dass innerhalb der Ausgleichkammer ein Druck von 0,3 bis 0,7 bar vorherrscht. Die Beaufschlagung der Ausgleichkammer mit einem solchen Druck ist dahingehend vorteilhaft, dass die Membran bei Erwärmung des Pulsationsdämpfers durch Ausdehnung des Mediums innerhalb der Ausgleichkammer nicht beschädigt wird.

Die Ausgleichkammer könnte mit einem Druck beauschlagt sein, der größer als der Atmosphärendruck ist. Hierdurch ist es möglich, Pulsationen mit höheren Frequenzen innerhalb einer hydraulischen Leitung zu dämpfen, da die Membran unter einer relativ hohen Spannung steht und folglich eine hohe Steifigkeit aufweist.

Vor diesem Hintergrund ist es denkbar, dass die Ausgleichkammer mit Luft befüllt ist. Luft ist als Medium auf einfach Weise bereitstellbar und kann in Form von Pressluft problemlos in die Ausgleichkammer verbracht werden.

Die Ausgleichkammer könnte mit Stickstoff befüllt sein. Stickstoff zeichnet sich als Inertgas durch eine besondere chemische Trägheit aus. Diese chemische Trägheit ist von Vorteil, wenn der Pulsationsdämpfer in Verbindung mit leicht entzündlichen Fluiden verwendet wird. Stickstoff ist als solcher nicht entzündlich, kann darüber hinaus Entzündungsprozesse brennbarer Medien hemmen und folglich Brandunfällen bei Undichtigkeiten vorbeugen.

Innerhalb der Ausgleichkammer könnte ein Vakuum herrschen. Die Vorkehrung eines Vakuums ist dahingehend vorteilhaft, dass auf ein Befüllmedium verzichtet werden kann. Dies erlaubt eine besonders kostengünstige Fertigung eines Pulsationsdämpfers.

Der Einlass, der Auslass und der Kanal könnten koaxial und kolinear zueinander angeordnet sein. Durch diese konkrete Ausgestaltung ist ein besonders schneller Fluidfluss durch den Kanal realisierbar. Insoweit ist der Pulsationsdämpfer bei höchsten Strömungsgeschwindigkeiten in hydraulischen Leitungen einsetzbar.

Die Ausgleichkammer und die Überlaufkammer könnten konzentrisch zum Kanal und zueinander angeordnet sein. Diese konkrete Ausgestaltung erlaubt einen konstruktiv einfachen Aufbau eines Pulsationsdämpfers und einen problemlosen Fluidaustausch zwischen Kanal und Überlaufkammer. Vor diesem Hintergrund ist denkbar, dass innerhalb des Kanals Durchgänge vorgesehen sind, welche sich radial in die Überlaufkammer erstrecken. Dabei ist insbesondere denkbar, die Durchgänge kreisförmig oder als Schlitze auszugestalten. Je nach der Viskosität des durch den Kanal strömenden Fluids kann die geometrische Ausgestaltung der Durchgänge in vorteilhafter Weise gewählt werden. Bei besonders zähflüssigen Fluiden kann die Vorkehrung von Schlitzen vorteilhaft sein, um einen Strömungswiderstand zu minimieren.

Vor dem Hintergrund des aus drei Bauteilen gefertigten Grundkörpers ist denkbar, dass ein Bauteil zwei weitere Bauteile zumindest teilweise aufnimmt. Dabei könnte ein erstes Bauteil in Form eines zylindrisch ausgestalteten Topfes ausgestaltet sein. In dieses könnte ein zylindrisches Bauteil mit radial ausgerichteten Durchgängen einfügbar sein, an welches sich ein weiteres zylindrisches Bauteil anschließt, das sich teilweise an die Innenwandung des topfförmigen ersten Bauteils anschmiegt. Durch diese konstruktive Ausgestaltung ist nur eine Schnittstelle der Bauteile gegen die Atmosphäre abzudichten.

Vor diesem Hintergrund könnten die verwendeten Bauteile rotationssymmetrisch ausgebildet sein. Die Verwendung rotationssymmetrischer Bauteile erlaubt eine einfache Fertigung der Bauteile.

Die Membran könnte zumindest teilweise als Dichtung fungieren. Durch diese Ausgestaltung ist ein besonders kompakter und einheitlicher Aufbau eines Pulsationsdämpfers realisiert. Die Verwendung der Membran als Dichtung minimiert die Anzahl der verwendeten Dichtungen innerhalb des Pulsationsdämpfers.

Die Membran könnte konzentrisch zum Kanal orientiert sein. Diese konkrete Anordnung der Membran erlaubt eine großflächige Aufnahme und dadurch eine effektive Dämpfung der Pulsationen des Fluids.

Vor diesem Hintergrund könnte die Membran fassförmig oder tonnenförmig ausgebildet sein. Diese Ausgestaltung ist im Hinblick auf eine maximale Oberfläche der Membran, welche mit dem pulsierenden Fluid in Wechselwirkung treten kann, vorteilhaft.

Ein nicht erfindungsgemäßer Pulsationsdämpfer weist einen Kolben auf, dem mindestens ein Führungsring zur Anlage an der Innenwandung der Ausgleichkammer zugeordnet ist. Die Vorkehrung von Führungsringen erlaubt ein spielfreies Verfahren der Kolbenumfangsfläche an der Innenwandung der Ausgleichkammer. Insoweit ist eine problemlos gleitende Bewegung des Kolbens ohne Verkippungen realisierbar.

Dem Kolben ist mindestens ein Dichtring zur dichtenden Anlage an der Innenwandung der Ausgleichkammer zugeordnet. Hierdurch ist realisiert, dass der Druck innerhalb der Ausgleichkammer konstant bleibt.

Vor diesem Hintergrund ist denkbar, dass der Dichtring als Führung fungiert. Auf raffinierte Weise ist durch diese konkrete Ausgestaltung realisiert, dass die Anzahl an Führungsringen minimiert werden kann. Insoweit ist durch eine einzige Dichtung und einen einzigen weiteren Führungsring eine spielfreie und abgedichtete Bewegung des Kolbens innerhalb der Ausgleichkammer realisierbar.

Dem Kolben könnte ein Stützring zugeordnet sein. Hierbei ist denkbar, dass der Stützring am Dichtring anliegt. Dies realisiert einen stabilen Sitz des Dichtrings, so dass dieser keinen Verkippungen oder Verdrehungen unterworfen wird.

Dem Kolben könnte zur Kraftbeaufschlagung eine Feder zugeordnet sein. Die Vorkehrung einer Feder erlaubt eine problemlose Einstellung der Grundsteifigkeit eines Pulsationsdämpfers durch Wahl einer geeigneten Federkonstante. Dabei könnten Spiralfedern, Blattfedern oder andere elastisch deformierbare Federelemente zum Einsatz kommen.

Vor diesem Hintergrund ist denkbar, dass die Feder innerhalb der Ausgleichkammer angeordnet ist und an der der Ausgleichkammer zugewandten Kolbenfläche anliegt. Durch diese konkrete Ausgestaltung wird der Kolben nicht nur durch den Druck innerhalb der Ausgleichkammer beaufschlagt, sondern zusätzlich durch die Federkraft. Diese konkrete Ausgestaltung erlaubt eine konstante Steifigkeit des Pulsationsdämpfers bei unterschiedlichen Temperaturen, da eventuelle Druckänderungen durch Erwärmung oder Abkühlung des Mediums in der Ausgleichkammer durch die Feder kompensierbar sind.

Die Innenwandung der Ausgleichkammer könnte zumindest teilweise spanlos gefertigt sein. Diese konkrete Ausgestaltung ermöglicht auf raffinierte Weise den Verzicht auf einen aufwendigen Rollierprozess, welcher notwendig ist, um Oberflächen zu glätten.

Der Grundkörper könnte ein Gewinde aufweisen. Die Vorkehrung eines Gewindes erlaubt auf problemlose Weise die Integration des Pulsationsdämpfers in ein bestehendes System hydraulischer Leitungen. Dabei ist insbesondere denkbar, dass ein Gewinde der Dimension M16 x 1,5 Verwendung findet.

Der Grundkörper könnte einstückig als Tiefziehteil ausgebildet sein. Diese konkrete Ausgestaltung erlaubt die Fertigung eines Pulsationsdämpfers, welcher aus wenigen Teilen zusammensetzbar ist. Denkbar ist vor diesem Hintergrund, dass aus einem Werkstück ein topfförmiger Grundkörper gebildet wird, in welchen ein Kolben einfügbar ist.

Die innere Oberfläche könnte Erhebungen aufweisen, die kleiner als 2µm sind. Eine solche Rauhigkeit stellt eine besondere Qualitätsgüte dar, die nur durch einen Tiefzieprozess erzielbar ist. Diese Qualitätsgüte erlaubt die Realisierung einer besonderen Dichtheit und eines ausgezeichneten Gleitvermögens von an einer solchen Fläche gleitenden Elementen.

Bei einer solchen Ausgestaltung des Grundkörpers ist denkbar, dass zumindest ein Sprengring als Anschlag für den Kolben vorgesehen ist. Dabei könnte der Sprengring am Inneren des Grundkörpers derart festgelegt sein, dass der Kolben nicht vollständig aus dem Grundkörper herausrutschen kann. Durch diese konkrete Ausgestaltung ist sichergestellt, dass die Ausgleichkammer nicht mit der Atmosphäre verbunden wird.

Der Grundkörper könnte einen separaten Deckel aufweisen, welcher zusammen mit dem Kolben die Ausgleichkammer begrenzt. Vor diesem Hintergrund ist denkbar, dass dem Deckel eine Dichtung zugeordnet und der Deckel durch eine Umbördelung des Grundkörpers festgelegt ist. Durch diese konkrete Ausgestaltung ist realisierbar, dass ein Kolben in ein hohles Werkstück eingefügt werden kann, wobei innerhalb des Werkstücks ein Anschlag für den Kolben ausgebildet ist. Dieser Anschlag könnte aus dem massiven Grundkörper in Form eines Überstands herausgebildet sein. Dies gewährleistet eine besonders stabile Anlage des Kolbens und verhindert ein Herausrutschen des Kolbens aus dem Grundkörper.

Der Grundkörper könnte eine Länge von bis zu 50 mm und einen Maximaldurchmesser von bis zu 50 mm aufweisen. Diese Dimensionierung des Pulsationsdämpfers ermöglicht dessen Verwendung in einem Einspritzsystem oder einer Einspritzanlage eines Kraftfahrzeugs. Vor diesem Hintergrund ist insbesondere denkbar, dass der Pulsationsdämpfer in Einspritzsystemen von Kraftfahrzeugen Verwendung findet, welche mit Dieselkraftstoff oder Benzin betrieben werden. Durch diese Verwendung des Pulsationsdämpfers ist vorteilhaft eine Glättung der Fluidversorgung des Einspritzsystems realisierbar. Die kleine Bauform des Pulsationsdämpfers ermöglicht eine einfache Montage.

Die Pulsationsdämpfer könnten bei einer Betriebstemperatur von -30°C bis +80°C und kurzzeitig sogar +90°C funktionsfähig sein. Der Berstdruck der Pulsationsdämpfer könnte jenseits von 100 bar liegen. Hierdurch ist der Einsatz der Pulsationsdämpfer in Kraftfahrzeugen möglich.

Die Innenräume sämtlicher Pulsationsdämpfer könnten entsprechend der DC Sauberheitsklassifizierung A 230 001 27 99 gereinigt sein. Dies entspricht einer Reinheitsklasse von 17/15/12 nach ISO 4406. Diese konkrete Ausgestaltung erlaubt den Einsatz der Pulsationsdämpfer in der Kraftfahrzeugindustrie.

Alle Ausführungen zu den Druckverhältnissen bzw. der sich in der Ausgleichkammer befindenden Medien, welche sich auf den Pulsationsdämpfer gemäß Patentanspruch 1 beziehen, beziehen sich auch auf den nicht erfindungsgemäßen Pulsationsdämpfer.

Auch ist die eingangs genannte Aufgabe durch ein Verfahren gemäß Patentanspruch 16 gelöst. Um Wiederholungen in Bezug auf die erfinderische Tätigkeit zu vermeiden, sei auf die Ausführungen zum Pulsationsdämpfer gemäß Patentanspruch 1 als solchem verwiesen.

In vorteilhafter Weise könnte der Arbeitsraum mit dem gleichen Medium befüllt werden, welches sich in der fertiggestellten Ausgleichkammer befindet. Diese konkrete Ausgestaltung erlaubt einen besonders einfachen Fertigungsprozess von Pulsationsdämpfern, da neben den im Arbeitsraum vorhandenen keine weiteren Medien durch komplexe Einrichtungen in die Ausgleichkammer eingefüllt werden müssen.

Schließlich ist die eingangs genannte Aufgabe durch eine Verwendung gemäß Patentanspruch 18 gelöst. Erfindungsgemäß ist erkannt worden, dass hydraulische Versorgungssysteme durch die Verwendung eines erfindungsgemäßen Pulsationsdämpfers stets einen optimalen Betrieb bei einfachem konstruktivem Aufbau sicherstellen können. Um Wiederholungen zu vermeiden, sei auf die Ausführungen zum Pulsationsdämpfer als solchem verwiesen.

Das hydraulische Versorgungssystem könnte als Einspritzsystem eines Kraftfahrzeugs ausgebildet sein. Diese Verwendung realisiert vorteilhaft einen motorschonenden Betrieb. Die Verwendung gewährleistet vorteilhaft eine Glättung der Fluidversorgung des Einspritzsystems.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Pulsationsdämpfers anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittzeichnung einen erfindungsgemäßen Pulsationsdämpfer, welcher von einem Fluid durchströmt werden kann,
- Fig. 2: in einer Schnittzeichnung einen nicht erfindungsgemäßen Pulsationsdämpfer, welcher einen in der Ausgleichkammer bewegbaren Kolben aufweist, und
- Fig. 3: in einer Schnittzeichnung einen nicht erfindungsgemäßen Pulsationsdämpfer, welcher einen federkraftunterstützten Kolben aufweist.

### Ausführung der Erfindung

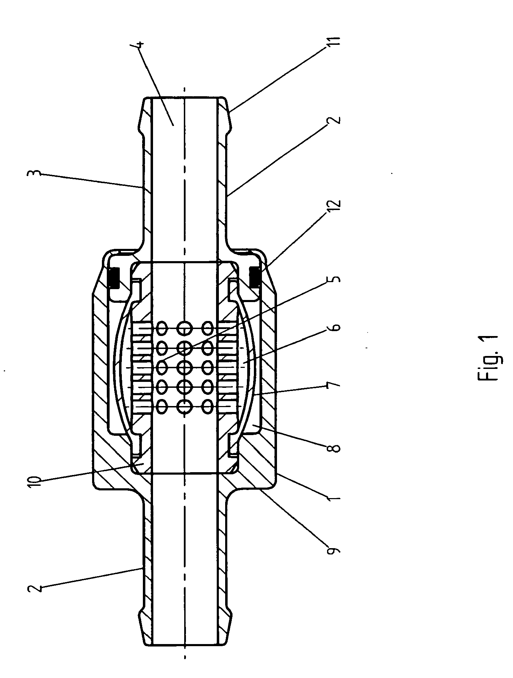

Fig. 1 zeigt einen erfindungsgemäßen Pulsationsdämpfer, welcher in hydraulischen Leitungen Verwendung finden kann. Dieser umfasst einen Grundkörper 1 mit einem Einlass 2 und einem Auslass 3, die durch einen Kanal 4 miteinander strömungsverbunden sind. Der Kanal 4 weist Durchgänge 5 auf, welche den Kanal 4 mit einer Überlaufkammer 6 strömungsverbinden. Insoweit kann ein mit Pulsationen beaufschlagtes Fluid, welches den Kanal 4 durchströmt, durch die Durchgänge 5 in die Überlaufkammer 6 ausweichen. Hierdurch können in dem Pulsationsdämpfer vor- oder nachgeschalteten Leitungen Drücke abgebaut werden. Die Überlaufkammer 6 ist durch eine flexible Membran von einer Ausgleichkammer 8 abgetrennt. Die Ausgleichkammer 8 ist als abgeschlossener Raum ohne Zuleitung ausgebildet.

Die Summe der Volumina der Ausgleichkammer 8 und der Überlaufkammer 6 ist im Betrieb stets konstant. Der Einlass 2, der Auslass 3 und der Kanal 4 sind koaxial und kolinear zueinander angeordnet. Die Ausgleichkammer 8 und die Überlaufkammer 6 sind konzentrisch zum Kanal 4 und zueinander angeordnet.

Der Grundkörper 1 besteht aus drei Bauteilen 9, 10 und 11, von denen jeweils zwei durch eine Dichtung 7, 12 gegeneinander abgedichtet sind. Das Bauteil 11 ist durch die Dichtung 12 gegen das Bauteil 9 abgedichtet. Das Bauteil 9 ist gegen das Bauteil 10 durch die Dichtung 7 abgedichtet und das Bauteil 11 ist gegen das Bauteil 10 ebenfalls durch die Dichtung 7 abgedichtet. Dabei fungiert die Membran 7 als Dichtung. Das Bauteil 9 nimmt zwei weitere Bauteile 10 und 11 zumindest teilweise auf. Die Bauteile 9, 10 und 11 sind rotationssymmetrisch ausgebildet.

Die Membran 7 ist konzentrisch zum Kanal 4 orientiert und fassförmig ausgebildet.

Der Einlass 2 und der Auslass 3 weisen einen Innendurchmesser von 8 mm und einen Außendurchmesser von 10 mm auf. Das Bauteil 10 weist eine Länge von 27 mm auf. Das Bauteil 9 fixiert das Bauteil 11 durch eine Umbördelung. Hierzu ist das Material, aus dem das Bauteil 9 gefertigt ist, an der Stelle der Umbördelung verjüngt. Die Membran ist aus dem Werkstoff 70 EPDM 120209 gefertigt.

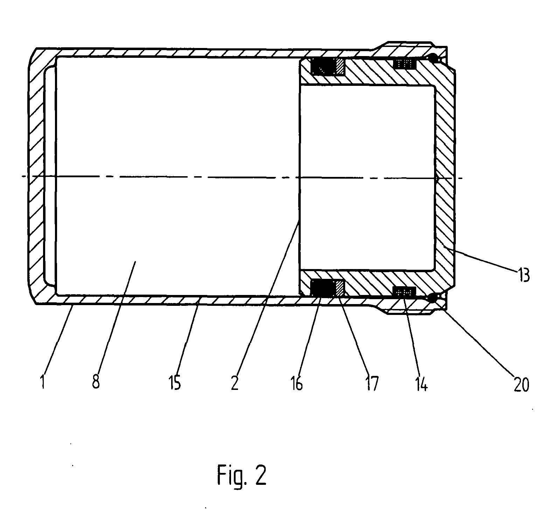

Fig. 2 zeigt in einer Schnittzeichnung einen nicht erfindungsgemäßen Pulsationsdämpfer, der als Kolbenspeicher verwendet werden kann. Dieser umfasst einen Grundkörper 1, wobei im Grundkörper 1 eine Ausgleichkammer 8 ausgebildet ist. Ein Kolben 13 ist zumindest teilweise innerhalb der Ausgleichkammer 8 bewegbar und ist auf der der Ausgleichkammer 8 abgewandten Seite mit Druck beaufschlagbar. Die Druckbeaufschlagung erfolgt durch ein Fluid. Die Ausgleichkammer 8 ist als abgeschlossener Raum ohne Zuleitung ausgebildet.

Dem Kolben 13 ist ein Führungsring 14 zur Anlage an der Innenwandung 15 der Ausgleichkammer 8 zugeordnet. Dem Kolben 13 ist ein Dichtring 16 zur dichtenden Anlage an der Innenwandung 15 der Ausgleichkammer 8 zugeordnet. Dabei fungiert der Dichtring 16 als Führung. Dem Kolben 13 ist ein Stützring 17 zugeordnet, der dem Dichtring 16 benachbart ist. Der Führungsring 14 bzw. der Dichtring 16 sind in Nuten angeordnet, welche im Kolben 13 ausgebildet sind.

Die Innenwandung 15 der Ausgleichkammer 8 ist spanlos gefertigt, wobei der Grundkörper 1 einstückig als Tiefziehteil ausgebildet ist. Der Innenwandung 15 des Grundkörpers 1 ist ein Sprengring 20 als Anschlag für den Kolben 13 zugeordnet.

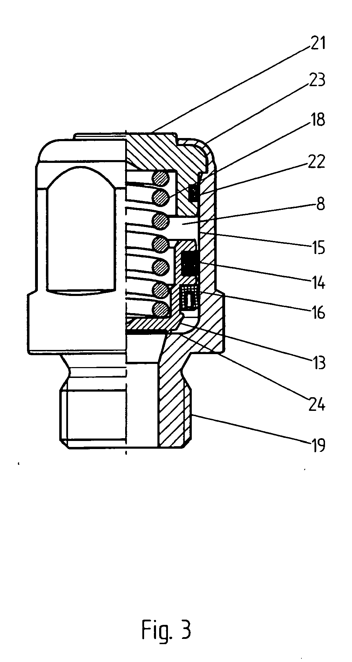

Fig. 3 zeigt in einer Schnittansicht einen nicht erfindungsgemäßen Pulsationsdämpfer, welcher in Einspritzsystemen von Kraftfahrzeugen Verwendung finden kann. Dieser weist einen Grundkörper 1 auf, wobei der Grundkörper 1 eine Ausgleichkammer 8 umfasst. Ein Kolben 13 ist innerhalb der Ausgleichkammer 8 bewegbar. Der Kolben 13 ist auf der der Ausgleichkammer 8 abgewandten Seite mit Druck durch ein Fluid beaufschlagbar. Die Ausgleichkammer 8 ist als abgeschlossener Raum ohne Zuleitung ausgebildet.

Dem Kolben 13 ist ein Führungsring 14 zur Anlage an der Innenwandung 15 der Ausgleichkammer 8 zugeordnet. Des Weiteren ist dem Kolben 13 ein Dichtring 16 zur dichtenden Anlage an der Innenwandung der Ausgleichkammer 8 zugeordnet. Dabei fungiert der Dichtring 16 als Führung.

Dem Kolben 13 ist zur Kraftbeaufschlagung eine Feder 18 zugeordnet. Die Feder 18 ist als Spiralfeder ausgebildet. Die Feder 18 ist innerhalb der Ausgleichkammer 8 angeordnet und liegt an der der Ausgleichkammer 8 zugewandten Kolbenfläche an.

Der Grundkörper 1 weist einen separaten Deckel 21 auf, welcher zusammen mit dem Kolben 13 die Ausgleichkammer 8 begrenzt. Dem Deckel 21 ist eine Dichtung 22 zugeordnet. Der Deckel 21 ist durch eine Umbördelung 23 des Grundkörpers 1 festgelegt.

Innerhalb des Grundkörpers 1 ist ein Anschlag 24 für den Kolben 13 ausgebildet.

Der Grundkörper 1 weist eine Länge von 40 mm und einen Maximaldurchmesser von 24 mm auf. Am Grundkörper 1 ist ein Gewinde 19 ausgebildet. Das Gewinde weist die Dimension M16 x 1,5 auf.

Der Grundkörper 1 ist in einem Einspritzsystem eines Kraftfahrzeugs positionierbar. Er dient dabei der Glättung der Fluidversorgung sowie der Reduzierung von Pulsationen der Fluide. Als Fluide fungieren in Einspritzsystemen von Kraftfahrzeugen Dieselkraftstoff oder Benzin.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Pulsationsdämpfer, umfassend einen Grundkörper (1) mit einem Einlass (2) und einem Auslass (3), die durch einen Kanal (4) miteinander strömungsverbunden sind, und eine zumindest teilweise flexible Membran (7), wobei der Kanal (4) Durchgänge (5) aufweist, welche den Kanal (4) mit einer Überlaufkammer (6) strömungsverbinden, und wobei die Überlaufkammer (6) durch die Membran (7) von einer Ausgleichkammer (8) abgetrennt ist, die im Grundkörper (1), als abgeschlossener Raum ohne Zuleitung ausgebildet ist, **dadurch gekennzeichnet, dass** der Grundkörper (1) aus drei Bauteilen (9, 10, 11) gefertigt ist, von denen jeweils zwei durch eine Dichtung (7, 12) gegeneinander abgedichtet sind, wobei eines (10) der Bauteile als Kanal (4) ausgestaltet ist.

2. Pulsationsdämpfer nach Anspruch 1, **dadurch gekennzeichnet, dass** die Summe der Volumina der Ausgleichkammer (8) und der Überlaufkammer (6) im Betrieb stets konstant ist.

3. Pulsationsdämpfer nach einem der Ansprüche 1 oder 2, **dadurch gekennzeichnet, dass** die Ausgleichkammer (8) mit Druck beaufschlagt ist.

4. Pulsationsdämpfer nach Anspruch 3, **dadurch gekennzeichnet, dass** die Ausgleichkammer (8) mit einem Druck beaufschlagt ist, der größer als der Atmosphärendruck ist.

5. Pulsationsdämpfer nach einem der Ansprüche 1 bis 4, **dadurch gekennzeichnet, dass** die Ausgleichkammer (8) mit Luft befüllt ist.

6. Pulsationsdämpfer nach einem der Ansprüche 1 bis 4, **dadurch gekennzeichnet, dass** die Ausgleichkammer (8) mit Stickstoff befüllt ist.

7. Pulsationsdämpfer nach Anspruch 1 oder 2, **dadurch gekennzeichnet, dass** innerhalb der Ausgleichkammer (8) ein Vakuum herrscht.

8. Pulsationsdämpfer nach einem der Ansprüche 1 bis 7, **dadurch gekennzeichnet, dass** der Einlass (2), der Auslass (3) und der Kanal (4) koaxial und kolinear zueinander angeordnet sind.

9. Pulsationsdämpfer nach einem der Ansprüche 1 bis 8, **dadurch gekennzeichnet, dass** die Ausgleichkammer (8) und die Überlaufkammer (6) konzentrisch zum Kanal (4) und zueinander angeordnet sind.

10. Pulsationsdämpfer nach einem der Ansprüche 1 bis 9, **dadurch gekennzeichnet, dass** ein Bauteil (9) zwei weitere Bauteile (10, 11) zumindest teilweise aufnimmt.

11. Pulsationsdämpfer nach einem der Ansprüche 1 bis 10, **dadurch gekennzeichnet, dass** die Bauteile (9, 10, 11) rotationssymmetrisch ausgebildet sind.

12. Pulsationsdämpfer nach einem der Ansprüche 1 bis 11, **dadurch gekennzeichnet, dass** die Membran (7) zumindest teilweise als Dichtung fungiert.

13. Pulsationsdämpfer nach einem der Ansprüche 1 bis 12, **dadurch gekennzeichnet, dass** die Membran (7) konzentrisch zum Kanal (4) orientiert ist.

14. Pulsationsdämpfer nach einem der Ansprüche 1 bis 13, **dadurch gekennzeichnet, dass** die Membran (7) fassförmig oder tonnenförmig ausgebildet ist.

15. Pulsationsdämpfer nach einem der Ansprüche 1 bis 14, **dadurch gekennzeichnet, dass** der Grundkörper (1) aus Stahl, Aluminium oder Kunststoff gefertigt ist.

16. Verfahren zur Herstellung von Pulsationsdämpfern nach einem der Ansprüche 1 bis 15, wobei zumindest die Bauteile des Pulsationsdämpfers, welche zur Herstellung einer abgeschlossenen Ausgleichkammer (8) ohne Zuleitung benötigt werden, in einem Arbeitsraum positioniert werden und wobei die Bauteile zur abschließenden Herstellung der Ausgleichkammer (8) zusammengefügt werden, wobei der Arbeitsraum mit dem gleichen Druck beaufschlagt wird, welcher in der fertiggestellten Ausgleichkammer (8) herrscht.

17. Verfahren nach Anspruch 16, **dadurch gekennzeichnet, dass** der Arbeitsraum mit dem gleichen Medium befüllt wird, welches sich in der fertiggestellten Ausgleichkammer (8) befindet.

18. Verwendung eines Pulsationsdämpfers nach einem der Ansprüche 1 bis 15 in hydraulischen Versorgungssystemen von Kraftfahrzeugen.

19. Verwendung nach Anspruch 18, **dadurch gekennzeichnet, dass** das hydraulische Versorgungssystem als Einspritzsystem ausgebildet ist.

## Claims

1. Pulsation damper, comprising a basic body (1) with an inlet (2) and an outlet (3) which are flow-connected to one another by means of a duct (4), and an at least partially flexible diaphragm (7), the duct (4) having passages (5) which flow-connect the duct (4) to an overflow chamber (6), and the overflow chamber (6) being separated by the diaphragm (7) from a compensating chamber (8) which is formed in the basic body (1) as a closed-off space without supply line, **characterized in that** the basic body (1) is manufactured from three components (9, 10, 11), of which in each case two are sealed off with respect to one another by means of a seal (7, 12), one (10) of the components being configured as a duct (4).

2. Pulsation damper according to Claim 1, **characterized in that** the sum of the volumes of the compensating chamber (8) and of the overflow chamber (6) is always constant during operation.

3. Pulsation damper according to either one of Claims 1 and 2, **characterized in that** the compensating chamber (8) is acted upon with pressure.

4. Pulsation damper according to Claim 3, **characterized in that** the compensating chamber (8) is acted upon with a pressure which is higher than the atmospheric pressure.

5. Pulsation damper according to one of Claims 1 to 4, **characterized in that** the compensating chamber (8) is filled with air.

6. Pulsation damper according to one of Claims 1 to 4, **characterized in that** the compensating chamber (8) is filled with nitrogen.

7. Pulsation damper according to Claim 1 or 2, **characterized in that** a vacuum prevails inside the compensating chamber (8).

8. Pulsation damper according to one of Claims 1 to 7, **characterized in that** the inlet (2), the outlet (3) and the duct (4) are arranged coaxially and collinearly with respect to one another.

9. Pulsation damper according to one of Claims 1 to 8, **characterized in that** the compensating chamber (8) and the overflow chamber (6) are arranged concentrically with respect to the duct (4) and to one another.

10. Pulsation damper according to one of Claims 1 to 9, **characterized in that** one component (9) at least partially receives two further components (10, 11).

11. Pulsation damper according to one of Claims 1 to 10, **characterized in that** the components (9, 10, 11) are of rotationally symmetrical design.

12. Pulsation damper according to one of Claims 1 to 11, **characterized in that** the diaphragm (7) functions at least partially as a seal.

13. Pulsation damper according to one of Claims 1 to 12, **characterized in that** the diaphragm (7) is oriented concentrically with respect to the duct (4).

14. Pulsation damper according to one of Claims 1 to 13, **characterized in that** the diaphragm (7) is of cask-shaped or barrel-shaped design.

15. Pulsation damper according to one of Claims 1 to 14, **characterized in that** the basic body (1) is manufactured from steel, aluminium or plastic.

16. Method for the production of pulsation dampers according to one of Claims 1 to 15, at least the components of the pulsation damper which are required for producing a closed-off compensating chamber (8) without supply line being positioned in a working space, and the components being assembled for the final production of the compensating chamber (8), the working space being acted upon with the same pressure which prevails in the finished compensating chamber (8).

17. Method according to Claim 16, **characterized in that** the working space is filled with the same medium which is located in the finished compensating chamber (8).

18. Use of a pulsation damper according to one of Claims 1 to 15 in hydraulic supply systems of motor vehicles.

19. Use according to Claim 18, **characterized in that** the hydraulic supply system is designed as an injection system.

## Revendications

1. Amortisseur de pulsations, qui comprend un corps de base (1) doté d'une admission (2) et d'une sortie (3) qui sont reliées l'une à l'autre à écoulement par un canal (4), ainsi qu'une membrane (7) dont au moins une partie est flexible, le canal (4) présentant des passages (5) qui relient à écoulement le canal (4) à une chambre de débordement (6), la membrane (7) séparant la chambre de débordement (6) d'une chambre d'équilibrage (8) formée dans le corps de base (1) sous la forme d'un espace fermé dépourvu d'amenée, **caractérisé en ce que**
le corps de base (1) est constitué de trois composants (9, 10, 11) dont deux sont séparés hermétiquement l'un de l'autre par un joint d'étanchéité (7, 12), l'un des composants, à savoir le composant (10), étant configuré comme canal (4).

2. Amortisseur de pulsations selon la revendication 1, **caractérisé en ce qu'**en fonctionnement, la somme des volumes de la chambre d'équilibrage (8) et de la chambre de débordement (6) est toujours constante.

3. Amortisseur de pulsations selon l'une des revendications 1 ou 2, **caractérisé en ce que** la chambre d'équilibrage (8) est placée sous pression.

4. Amortisseur de pulsations selon la revendication 3, **caractérisé en ce que** la chambre d'équilibrage (8) est placée sous une pression supérieure à la pression atmosphérique.

5. Amortisseur de pulsations selon l'une des revendications 1 à 4, **caractérisé en ce que** la chambre d'équilibrage (8) est remplie d'air.

6. Amortisseur de pulsations selon l'une des revendications 1 à 4, **caractérisé en ce que** la chambre d'équilibrage (8) est remplie d'azote.

7. Amortisseur de pulsations selon les revendications 1 ou 2, **caractérisé en ce qu'**une dépression règne à l'intérieur de la chambre d'équilibrage (8).

8. Amortisseur de pulsations selon l'une des revendications 1 à 7, **caractérisé en ce que** l'admission (2), la sortie (3) et la canal (4) sont disposés coaxialement et sont colinéaires les uns par rapport aux autres.

9. Amortisseur de pulsations selon l'une des revendications 1 à 8, **caractérisé en ce que** la chambre d'équilibrage (8) et la chambre de débordement (6) sont disposées concentriquement par rapport au canal (4) et concentriquement l'une par rapport à l'autre.

10. Amortisseur de pulsations selon l'une des revendications 1 à 9, **caractérisé en ce qu'**un composant (9) reprend au moins en partie deux autres composants (10, 11).

11. Amortisseur de pulsations selon l'une des revendications 1 à 10, **caractérisé en ce que** les composants (9, 10, 11) sont symétriques en rotation.

12. Amortisseur de pulsations selon l'une des revendications 1 à 11, **caractérisé en ce que** la membrane (7) joue au moins en partie le rôle d'un joint d'étanchéité.

13. Amortisseur de pulsations selon l'une des revendications 1 à 12, **caractérisé en ce que** la membrane (7) est orientée concentriquement par rapport au canal (4).

14. Amortisseur de pulsations selon l'une des revendications 1 à 13, **caractérisé en ce que** la membrane (7) a la forme d'un fût ou d'un tonneau.

15. Amortisseur de pulsations selon l'une des revendications 1 à 14, **caractérisé en ce que** le corps de base (1) est réalisé en acier, en aluminium ou en matière synthétique.

16. Procédé de fabrication d'amortisseurs de pulsations selon l'une des revendications 1 à 15, dans lequel au moins les composants de l'amortisseur de pulsations qui sont nécessaires pour réaliser une chambre d'équilibrage fermée (8) dépourvue de conduit d'amenée sont placés dans une chambre de travail, les composants nécessaires pour fermer la chambre d'équilibrage (8) étant assemblés, la chambre de travail étant placée sous la même pression que celle qui règnera dans la chambre d'équilibrage (8) terminée.

17. Procédé selon la revendication 16, **caractérisée en ce que** la chambre de travail est remplie du même fluide que celui qui se trouvera dans la chambre d'équilibrage (8) terminée.

18. Utilisation d'un amortisseur de pulsations selon l'une des revendications 1 à 15 dans des systèmes hydrauliques d'alimentation de véhicules automobiles.

19. Utilisation selon la revendication 18, **caractérisée en ce que** le système d'alimentation hydraulique est configuré comme système d'injection.
